# EUROPEAN PATENT APPLICATION

(11) **EP 2 690 829 A1**
(43) Date of publication of application: **29.01.2014**
(21) Application number: 12785729.0
(22) Date of filing: 16.04.2012
(51) Int. Cl.: H04L 12/54

(54) **METHOD FOR MANAGING CONTENT BY CONTENT MANAGEMENT SYSTEM AND CONTENT MANAGEMENT SYSTEM**

(30) Priority: 31.08.2011 CN 201110255483
(71) Applicant: ZTE Corporation, Shenzhen, Guangdong 518057 (CN)
(72) Inventor: LIU, Xiaojing, Shenzhen, Guangdong 518057 (CN); LIU, Zhijun, Shenzhen, Guangdong 518057 (CN)
(74) Representative: Tischner, Oliver
(86) International application number: PCT/CN2012/074071
(87) International publication number: WO 2012/155736

(57) **Abstract**

A method for managing a content by a content management system (CMS) and a content management system are provided, wherein, the method is applied to the content management system, comprising: interacting with a media service system, sending an entity file of a content to be distributed to the media service system, and then receiving storage address information of the entity file in the media service system sent by the media service system; sending Metadata information of the content to be distributed to a service management system, and then receiving service information selected for the content to be distributed replied by the service management system; and sending the Metadata information, the service information and the storage address information in the media service system of the content to be distributed to a portal service system. After adopting the above-mentioned technical scheme, it realizes the complete control by the CMS on the content without needing to increase the new function entity, and the CMS can control the data of the content in each function entity, which strengthens the management and control by the CMS on the content, and makes it possible that the CMS is able to observe and control the content.

## Description

### Technical Field

The present document relates to the content management field, and in particular, to a method of managing a content by a content management system (content manage system, CMS) and a content management system.

### Background of the Related Art

CMS is actually a very extensive call, from a general blog procedure and news releasing procedure to a comprehensive website management procedure, all can be called as the content management system. According to different requirements, the CMS has several kinds of different sorting ways. For example, on the basis of different application lays, it can be divided into: a CMS paying attention to the background management and a CMS paying attention to the style design and a CMS paying attention to the foreground releasing, etc. For the existing various CMSs at present, all the final interfaces are much the same, but differ in thousands ways in the programming style and the management mode.

Along with the releasing of the policy of the integration of three networks, more and more operators participate in the operation of the video content, and the management for the media content becomes more and more important. The corresponding CMS system arises at the historic moment. The CMS video mainly includes the content production, editing, reviewing and releasing. Because there is strict copyright limitation on the content, it seems particularly important to control the distributed content.

The CMS will usually distribute the content to the subordinate service management system, and the subordinate service management system distributes the relevant content to other systems step by step. After adopting this content distribution way, the CMS is unable to control the distributed content, so it goes against managing the content by the CMS.

### Summary of the Invention

The technical problem that the present document requires to solve is to provide a method for managing a content by a CMS and a content management system, to overcome the defect that the CMS is unable to manage the content.

In order to solve the above-mentioned problem, the present document adopts the following technical scheme:
a method for managing a content by a content management system, applied to the content management system, comprises:
   interacting with a media service system, sending an entity file of a content to be distributed to the media service system, and then receiving storage address information of the entity file in the media service system sent by the media service system;
   sending Metadata information of the content to be distributed to a service management system, and then receiving service information selected for the content to be distributed replied by the service management system; and
   sending the Metadata information, the service information and the storage address information in the media service system of the content to be distributed to a portal service system.

Alternatively, the step of interacting with a media service system, sending an entity file of a content to be distributed to the media service system comprises:
the content management system sending the storage address information of the content to be distributed in the content management system to the media service system; and
the media service system obtaining the entity file of the content to be distributed in the content management system according to the received storage address information in the content management system.

Alternatively, the method further comprises:
the content management system sending a content offline command to the portal service system, wherein, the content offline command is used to indicate the portal service system to set information related to a designated content as invisible.

Alternatively, the method further comprises:
the content management system sending a content deleting command to the portal service system, the service management system and the media service system respectively, wherein, the content deleting command is used to indicate a receiver of the content deleting command to delete information related to a designated content.

Alternatively, the Metadata information of the content to be distributed comprises any one or any combination of the following information: file size, duration, copyright, code rate and resolution.

A content management system comprises a first module, a second module and a third module, wherein,
the first module is configured to interact with a media service system, send an entity file of a content to be distributed to the media service system, and then receive storage address information of the entity file in the media service system sent by the media service system;
the second module is configured to send Metadata information of the content to be distributed to a service management system, and then receive service information selected for the content to be distributed replied by the service management system; and
the third module is configured to send the Metadata information, the service information and the storage address information in the media service system of the content to be distributed to a portal service system.

Alternatively, the first module is configured to interact with the media service system and send the entity file of the content to be distributed to the media service system by a following way:
the first module sending the storage address information of the content to be distributed in the content management system to the media service system; and transmitting the entity file of the content to be distributed obtained from the content management system by the media server according to the received storage address information in the content management system to the media service system.

Alternatively, the content management system further comprises:
a fourth module, configured to send a content offline command to the portal service system, wherein, the content offline command is used to indicate the portal service system to set information related to a designated content as invisible.

Alternatively, the content management system further comprises:
a fifth module, configured to send a content deleting command to the portal service system, the service management system and the media service system respectively, wherein, the content deleting command is used to indicate a receiver of the content deleting command to delete information related to a designated content.

Alternatively, the Metadata information of the content to be distributed comprises any one or any combination of the following information: file size, duration, copyright, code rate and resolution.

After adopting the above-mentioned technical scheme, it realizes the complete control by the CMS on the content without needing to increase the new function entity, and the CMS can control the data of the content in each function entity, which strengthens the management and control by the CMS on the content, and makes it possible that the CMS is able to observe and control the content.

### Brief Description of Drawings

FIG. 1 shows a location of the CMS in each ability service system according to an embodiment of the present document;
FIG. 2 is a diagram of a content distribution flow according to an embodiment of the present document;
FIG. 3 is a diagram of a content offline flow according to an embodiment of the present document;
FIG. 4 is a diagram of a content deleting flow according to an embodiment of the present document.

### Preferred Embodiments of the Invention

In order to make the objective, technical scheme and advantage of the present document more clear and obvious, the embodiment of the present document is described in detail with reference to the accompanying drawings hereinafter. It should be illustrated that, in the case of not conflicting, the embodiments in the present application and features in these embodiments can be combined with each other. And all these combinations are embodied in the scope of the appended claims of the present document.

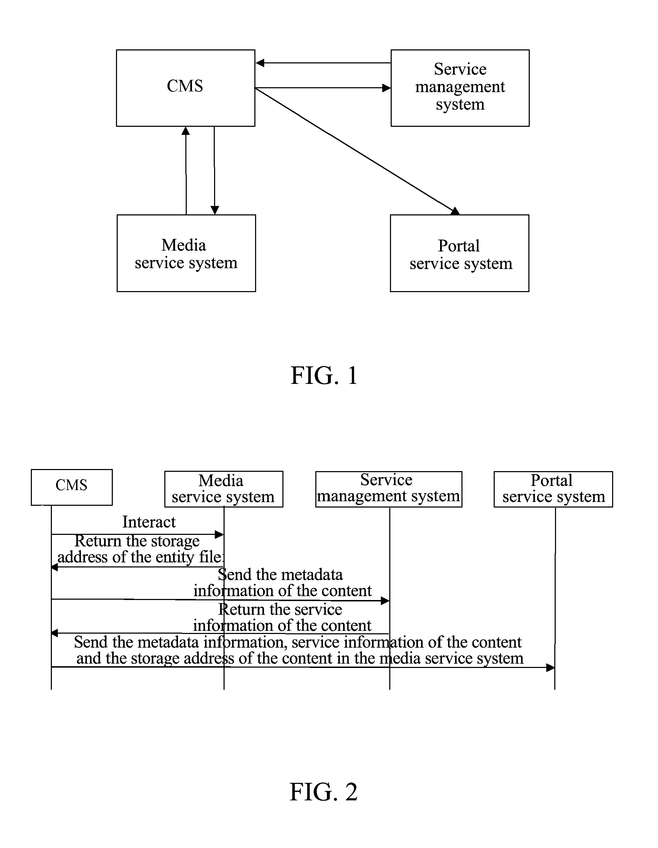

FIG. 1 shows a diagram of a location of the CMS in each ability service system according to an embodiment of the present document, including a CMS, a service management system, a media service system used for providing a stream media service, and a portal service system used for providing a portal service.

In the present embodiment, the CMS manages the content, including: controlling the distribution, offline and deleting of the content.

A method for the CMS controlling the distribution of the content, as shown in FIG. 2, including the following steps:
in step 10, the CMS sends the local storage address information of the entity file of the content to be distributed to the media service system;
wherein, the above-mentioned memory address can, but not limited to, adopt the uniform resource locator (URL) format;
in step 20, the media service system obtains the entity file of the content to be distributed from the CMS according to the received storage address information, and stores the obtained entity file in the system, and then returns the storage address information of the entity file of the content to be distributed in the system to the CMS;
in step 30, the CMS sends the Metadata information of the above-mentioned content to be distributed which is input into the system in advance to the service management system;
wherein, the Metadata are used for describing the information of the content to be distributed, including any one or any combination of the follows: file size, duration, copyright, code rate and resolution;
in step 40, the service management system selects the service information for the above-mentioned content to be distributed according to the received Metadata information, and then sends the service information selected for the content to be distributed to the CMS;
wherein, the service information includes: charging information, etc.
in step 50, the CMS sends the Metadata information and the service information of the content to be distributed and the storage address information of the content to be distributed in the media service system to the portal service system, and the portal service system displays them in follows.

When realizing, the sequence of step 10 and step 30 can be exchanged, that is: the CMS sends the Metadata information of the content input into the system in advance to the service management system first, and then sends the local storage address information of the entity file of the content to the media service system.

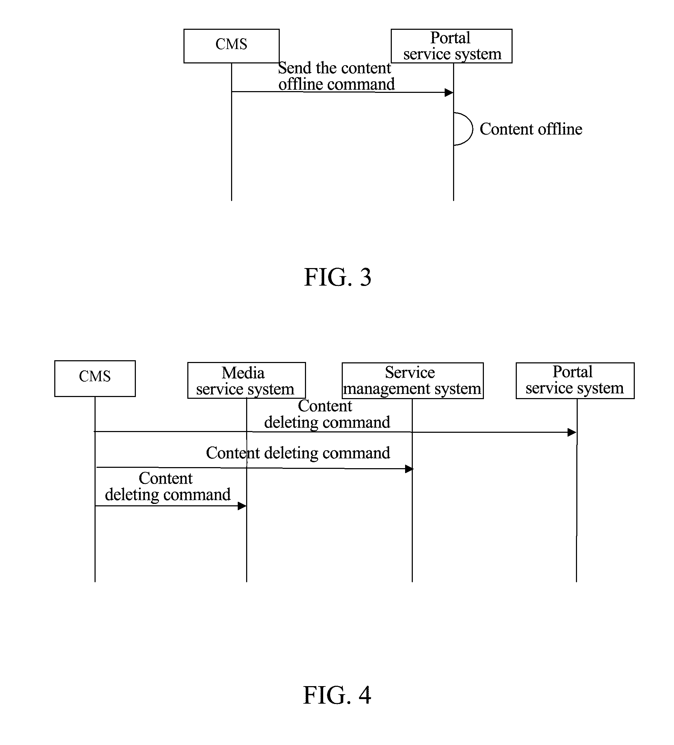

As shown in FIG. 3, the content offline flow includes the following steps:
301, the CMS sends the content offline command to the portal service system, wherein, the content offline command is used to indicate the portal service system to perform the offline operation on the designated content;
302, the portal system performs the offline operation on the designated content after receiving the above-mentioned content offline command, that is, sets the information related to the designated content as invisible to the user.

As shown in FIG. 4, the content deletion flow includes the following steps:
401, the CMS sends the content deleting command to the portal service system, the command is used to indicate the portal service system to perform the deleting operation on the designated content; and the portal service system deletes the information related to the designated content in the system after receiving the command;
402, the CMS sends the content deleting command to the service management system, the command is used to indicate the service management system to perform the deleting operation on the designated content; and the service management system deletes the information related to the designated content in the system after receiving the command;
403, the CMS sends the content deleting command to the media service system, the command is used to indicate the media service system to perform the deleting operation on the designated content; and the media service system deletes the information related to the designated content in the system after receiving the command.

In sum, for the content distribution, all operations about the content are completed by the CMS. When the content is sent, the CMS sends the information related to the content to each corresponding ability system step by step; when the content is offline, the relevant command is also sent by the CMS system; and when the content is deleted, the CMS controls each ability system to delete the corresponding content data.

In addition, although the above-mentioned method only mentions the service flows in the case of the content distribution, offline and deleting, for the operation, such as, the content online, if the CMS system is required to perform the control, it also can adopt a flow similar to the above-mentioned content offline flow, and the CMS control the portal service system to perform the content online operation directly through the command (that is, set the content as visible to the user). Because they all belong to content management, and can be managed by the CMS system uniformly, therefore they will no longer be explained here in detail.

Correspondingly, a content management system corresponding to the present embodiment includes a first module, a second module and a third module, wherein,
the first module is configured to interact with a media service system, send an entity file of a content to be distributed to the media service system, and then receive storage address information of the entity file in the media service system sent by the media service system;
the second module is configured to send Metadata information of the content to be distributed to a service management system, and then receive service information selected for the content to be distributed replied by the service management system; and
the third module is configured to send the Metadata information, the service information and the storage address information in the media service system of the content to be distributed to a portal service system.

Alternatively, the first module is configured to interact with the media service system and send the entity file of the content to be distributed to the media service system by a following way:
the first module is used for sending the storage address information of the content to be distributed in the content management system to the media service system; and transmitting the entity file of the content to be distributed obtained from the content management system by the media server according to the received storage address information in the content management system to the media service system.

Alternatively, the content management system further includes a fourth module, wherein,
the fourth module is configured to send a content offline command to the portal service system, the content offline command is used to indicate the portal service system to set information related to a designated content as invisible.

Alternatively, the content management system further includes a fifth module, wherein,
the fifth module is configured to send a content deleting command to the portal service system, the service management system and the media service system respectively, the content deleting command is used to indicate a receiver of the content deleting command to delete information related to a designated content.

Alternatively, the Metadata information of the content to be distributed comprises any one or any combination of the following information: file size, duration, copyright, code rate and resolution.

It can be understood by those skilled in the art that all or part of steps in the above-mentioned method can be fulfilled by programs instructing the relevant hardware, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present document is not limit to any specific form of the combination of the hardware and software.

The above are only the preferred embodiments of the present document and are not intended to limit the protection scope of the present document. The present document can have a variety of other embodiments according to the summary of the invention. Those skilled in the art can make the corresponding modifications and variations according to the present document without departing from the spirit and essence of the present document. All of modifications, equivalents and/or variations without departing from the spirit and essence of the present document should be embodied in the scope of the appended claims of the present document.

### Industrial Applicability

After adopting the above-mentioned technical scheme, it realizes the complete control by the CMS on the content without needing to increase the new function entity, and the CMS can control the data of the content in each function entity, which strengthens the management and control by the CMS on the content, and makes it possible that the CMS is able to observe and control the content. Therefore the present document has very strong industrial applicability.

## Claims

1. A method for managing a content by a content management system, applied to the content management system, comprising:
interacting with a media service system, sending an entity file of a content to be distributed to the media service system, and then receiving storage address information of the entity file in the media service system sent by the media service system;
sending Metadata information of the content to be distributed to a service management system, and then receiving service information selected for the content to be distributed replied by the service management system; and
sending the Metadata information, the service information of the content to be distributed, and the storage address information of the content to be distributed in the media service system to a portal service system.

2. The method according to claim 1, wherein, the step of interacting with a media service system, sending an entity file of a content to be distributed to the media service system comprises:
the content management system sending the storage address information of the content to be distributed in the content management system to the media service system; and
the media service system obtaining the entity file of the content to be distributed in the content management system according to the received storage address information in the content management system.

3. The method according to claim 1, further comprising:
the content management system sending a content offline command to the portal service system, wherein, the content offline command is used to indicate the portal service system to set information related to a designated content as invisible.

4. The method according to claim 2, further comprising:
the content management system sending a content deleting command to the portal service system, the service management system and the media service system respectively, wherein, the content deleting command is used to indicate a receiver of the content deleting command to delete information related to a designated content.

5. The method according to claim 1, wherein, the Metadata information of the content to be distributed comprises any one or any combination of following information: file size, duration, copyright, code rate and resolution.

6. A content management system, comprising a first module, a second module and a third module, wherein,
the first module is configured to interact with a media service system, send an entity file of a content to be distributed to the media service system, and then receive storage address information of the entity file in the media service system sent by the media service system;
the second module is configured to send Metadata information of the content to be distributed to a service management system, and then receive service information selected for the content to be distributed replied by the service management system; and
the third module is configured to send the Metadata information, the service information of the content to be distributed, and the storage address information of the content to be distributed in the media service system to a portal service system.

7. The content management system according to claim 6, wherein, the first module is configured to interact with the media service system and send the entity file of the content to be distributed to the media service system by a following way:
the first module sending the storage address information of the content to be distributed in the content management system to the media service system; and transmitting the entity file of the content to be distributed obtained from the content management system by the media server according to the received storage address information in the content management system to the media service system.

8. The content management system according to claim 6, further comprising:
a fourth module, configured to send a content offline command to the portal service system, wherein, the content offline command is used to indicate the portal service system to set information related to a designated content as invisible.

9. The content management system according to claim 7, further comprising:
a fifth module, configured to send a content deleting command to the portal service system, the service management system and the media service system respectively, wherein, the content deleting command is used to indicate a receiver of the content deleting command to delete information related to a designated content.

10. The content management system according to claim 6, wherein, the Metadata information of the content to be distributed comprises any one or any combination of following information: file size, duration, copyright, code rate and resolution.
